(19) Europäisches Patentamt
European Patent Office
Office européen des brevets

(11) **EP 1 167 978 B1**

(12) **EUROPÄISCHE PATENTSCHRIFT**

(45) Veröffentlichungstag und Bekanntmachung des Hinweises auf die Patenterteilung:
**08.04.2009 Patentblatt 2009/15**

(51) Int Cl.:
*G01P 15/08* (2006.01)     *G01P 15/13* (2006.01)
*H05H 3/04* (2006.01)     *B64G 1/26* (2006.01)

(21) Anmeldenummer: **01112524.2**

(22) Anmeldetag: **23.05.2001**

(54) **Inertialsensor zur Lagerung und Kontrolle einer Inertialreferenz in einem Satelliten**

Inertial sensor for suspension and control of an inertial reference in a satellite

Capteur inertial pour la suspension et le contrôle d'une référence inertiale dans un satellite

(84) Benannte Vertragsstaaten:
**DE FR GB IT**

(30) Priorität: **28.06.2000 DE 10031542**

(43) Veröffentlichungstag der Anmeldung:
**02.01.2002 Patentblatt 2002/01**

(73) Patentinhaber: **Astrium GmbH**
**81663 München (DE)**

(72) Erfinder:
• **Johann, Ulrich, Dr.**
**88682 Salem (DE)**

• **Jörck, Hartmut**
**24649 Wiemersdorf (DE)**

(74) Vertreter: **Meel, Thomas**
**Patentassessor,**
**c/o Dornier GmbH**
**L H G**
**88039 Friedrichshafen (DE)**

(56) Entgegenhaltungen:
**DE-A- 3 606 875     US-A- 3 275 835**
**US-A- 3 710 279**

**Beschreibung**

Die Erfindung betrifft einen Inertialsensor als Inertialreferenz zur Lage- und Positionsbestimmung von Satelliten und Satellitenteilen gemäß dem Oberbegriff des Patentanspruchs 1.

Eine neue Generation wissenschaftlicher Weltraummissionen insbesondere basierend auf hochauflösenden optischen Instrumenten erfordert eine sehr genaue Kenntnis der Restbeschleunigung, der relativen Positionen und Lage sowie Lageschwankungen von Satelliten und Satellitenteilen. Die damit verbundenen Freiheitsgrade werden durch innere (z.B. Schwerpunktverlagerung oder Trägheitsmomentänderung) und äußere Störeinflüsse (z.B. Sonnenwind oder Restmagnetfelder) in nicht zu vernachlässigender Größenordnung beeinflußt. Auf europäischer Ebene sind hierzu relevante Missionen GAIA, IRSI, LISA, DIVA, GOCE und STEP.

Bisher werden zur Bestimmung der Restbeschleunigung von Satelliten und Satellitenteile Beschleunigungssensoren, welche über eine weiche Kopplung mit einer Probemasse verbunden sind, eingesetzt. Zur Lage- und Positionsbestimmung kommen vorwiegend hochauflösende optische Sternsensoren in Form von z.B. CCD-Kameras zum Einsatz (z.B. Hubble-Teleskop).

Inertialsensoren sind bisher lediglich als inertiale Positionsreferenz im Einsatz. Zur Bestimmung der Position von Satelliten oder Satellitenteilen wird die Position einer Probemasse relativ zu ihrer Satellitenumgebung gemessen. Die Position der Probemasse wird üblicherweise kapazitiv bestimmt und mittels elektrischer Feldern kontrolliert. Hierzu wird die im allgemeinen metallische Probemasse elektrostatisch aufgeladen. Die elektrostatische Aufladung sowie die induzierten Ladungspolaristionen verursachen Kräfte und Momente (z.B. Lorentzkraft durch Bewegung in einem äußeren Magnetfeld oder elektrische Dipolmomente), die die inertiale Bewegung der Probemasse stören. Durch elektrische Streufelder (parasitäre Kapazitäten) kommt es, insbesondere bei großen Abständen (im Bereich von einigen Millimetern) zwischen der Probemasse und den Referenzflächen (Elektroden), zu einem nichtlinearem Verhalten der Abstandsmessung. Zur Minimierung der direkten Wirkung des Magnetfeldes auf die Probemasse wird für die Probemasse ein Material niedriger Suszeptibilität gewählt. Eine weitere Maßnahme zur Abschirmung von Magnetfeldern ist der Einsatz von μ-Metallen, die zwar eine hohe magnetische Permeabilität besitzen, allerdings durch Starterschütterungen des Satelliten in ihrer Wirkung stark beeinträchtigt werden.

In US 4,170,904 wird ein Inertialsensor beschrieben, bei dem sich eine Probemasse in einem geschlossenen Gehäuse befindet. Das Gehäuse schirmt die Probemasse von störenden äußeren Einflüssen (z.B. Strahlungsdruck der Sonne, elektrostatische Felder) ab. Die Probemasse wird zur Lage- und Positionsregelung einem mittels Spulen erzeugten, kontrollierbarem Magnetfeld ausgesetzt.

DE 199 21 390 A1 beschreibt ein Positionierungssystem für eine Meßeinrichtung eines Satelliten. Dabei wird die gesamte Meßeinrichtung einschließlich der Elektronik oder zumindest Teile davon, von dem die Meßeinrichtung umgebenden Satelliten entkoppelt. Somit ist es möglich, die Meßeinrichtung von externen Störungen zu entkoppeln. Als nachteilig erweist sich allerdings der große bauliche Aufwand.

In EP 0 569 994 A2 wird ein Inertialsensor beschrieben, in dem sich eine Probemasse in einem elektrisch und magnetisch feldfreiem, von einem Gehäuse umschlossenen Raum befindet. Zur Bestimmung von Lage und Position der Probemasse sind optische Messstrecken vorhanden. Die Einstellung der Lage und Position der Probemasse erfolgt mittels nieder- oder hochfrequenter Schallwellen, die aus einem Wellenprojektor emittiert werden. Diese Schallwellen sind der Bewegung der Probemasse entgegen gerichtet. Der Nachteil dieser Anordnung ist der kostenintensive Aufbau sowie die ungenaue Messung von Lage und Position der Probemasse.

Die US 3,710,279 offenbart einen Inertialsensor mit einer Probemasse in einem abgeschlossenen Raum. Die Position der Probemasse in dem Raum ist durch Lichtdrücke, mit denen im abgeschlossenen Raum angeordnete Laser-Lichtquellen die Probemasse beaufschlagen, einstellbar. Die Erfassung der Position erfolgt mittels optischer Messvorrichtungen.

Aus der DE 36 06 875 A1 ist ein optischer Beschleunigungsmesser bekannt, bei dem die Erfassung der Position eines Körpers mit einem interferometrischen Messverfahren erfolgen kann. Dabei ist der Körper, dessen träge Masse beschleunigt wird, in einem anisotropen und nichtlinearen Kraftfeld angeordnet, so dass die auf den Körper wirkende Kraft nicht linear von der Auslenkung des Körpers aus seiner Ruhelage abhängt. In einer konkreten Ausgestaltung ist vorgesehen, den Körper an vier Zugfedern aufzuhängen, die in der Ruhelage des Körpers in einer Ebene senkrecht zur Richtung der zu messenden Beschleunigung angeordnet sind und jeweils miteinander einen rechten Winkel einschließen.

Aufgabe der Erfindung ist es, einen Inertialsensors zu schaffen, mit dem eine verbesserte und gegenüber äußeren Störeinflüssen unempfindliche sowie hochgenaue Lage- und Positionsbestimmung von Satelliten und Satellitenteilen möglich ist.

Diese Aufgabe wird mit dem Inertialsensor in Anspruch 1 gelöst. Besondere Ausführungsformen des Inertialsensors sind Gegenstand von abhängigen Ansprüchen.

Erfindungsgemäß ist der von dem Gehäuse umschlossene Raum elektrisch und magnetisch im Wesentlichen feldfrei. Die optischen Messstrecken sind zwischen Referenzelementen am Gehäuse und an der Probemasse eingerichtet, so dass Lage und/oder Position der Probemasse relativ zu den Referenzelementen am Gehäuse bestimmbar sind. Die optischen Messstrecken sind als optische interferometrische Messstrecken ausgebildet, wobei mittels der in den optischen interferometrischen Messstrecken auf die Probemasse ausgeübten Lichtdrucke die Lage und Position der Probemasse einstellbar ist.

Die Probemasse kann einerseits in dem Gehäuse inertial frei schweben und dabei idealerweise nur der Gravitationswechselwirkung unterliegen oder gleichförmig mit dem Gehäuse um eine gemeinsame Achse mit einer gleichen nominalen Winkelgeschwindigkeit rotieren.

Um innerhalb des Gehäuses auftretende Strahlungsgradienten, die zu Beschleunigungen im Bereich von $10^{-15}$ - $10^{-13}$ m/s$^2$ führen können, zu verhindern, wird das die Probemasse umschließende Gehäuse in einer vorteilhaften Ausführung thermisch als schwarzer Körper ausgebildet (z.B. durch Isolation). Somit wird eventuelles, durch die optischen Messstrecken ins Gehäuse eingebrachtes Streulicht gleichmäßig thermalisiert (Ulbricht-Kugel).

Das Gehäuse sollte mechanisch stabilisiert sein, da es die Referenzelemente enthält, und z.B. aus einer Glaskeramik (Zerodur® oder ULE®) bestehen. Zusätzlich kann das Gehäuse gegen Restmagnetfelder abgeschirmt sein.

An der inneren Oberfläche des Gehäuses befinden sich die gehäuseseitigen Referenzelemente zur relativen Lage- und Positionsbestimmung der Probemasse. Zusätzlich kann die innere Oberfläche des Gehäuses mit einer leitfähigen Beschichtung (z.B. Goldbeschichtung) belegt werden, um elektrostatische Felder zu eliminieren. Ferner kann das Gehäuse evakuiert oder mit Gas gefüllt sein.

In einer weiteren bevorzugten Ausführung kann die Oberfläche der Probemasse als Reflektor ausgebildet sein, indem die Oberfläche z.B. verspiegelt ausgeführt ist. In einer besonders vorteilhaften Ausführung können auf die Oberfläche der Probemasse optische Reflektorelemente, z.B. Spiegel, aufgebracht sein. Diese Reflektorelemente können hierbei planar oder sphärisch zentriert ausgestaltet sein. Die Oberfläche der Probemasse oder die auf die Oberfläche aufgebrachten Reflektorelemente bilden einen Endspiegel einer der optischen interferometrischen Messstrecken.

Die Probemasse ist vorteilhaft symmetrisch ausgebildet und kann in ihrer Form z.B. Würfel-, quader-, tetraeder-, Scheiben- oder kugelförmig gewählt sein. Die Form richtet sich nach den Forderungen zur Kompaktheit (Minimierung der Reststörelemente) sowie nach den gewünschten Trägheitsmomenten in den Rotationsachsen.

Insbesondere ist die Form der Probemasse unabhängig von der gewählten optischen Anordnung zur Lage- und Positionsbestimmung. Das Material der Probemasse wird hinsichtlich der Minimierung der Störeinflüsse bestimmt. Hierbei sind wesentliche Eigenschaften für die Materialwahl:

• eine minimale magnetische Suszeptibilität,

• eine hohe thermische und elektrische Leitfähigkeit,

• eine hohe Dichte und

• ein geringer thermischer Ausdehungskoeffizient

Die Bestimmung von Lage- und Position der Probemasse entlang der gewünschten Freiheitsgrade und relativ zu den Referenzelementen am Gehäuse erfolgt durch an sich bekannte lasermetrologische Verfahren. Geeignete Verfahren sind in der Literatur beschrieben ([1], [2], [3], [4]). Im Einzelnen können insbesondere folgende Messverfahren eingesetzt werden:

• die Heterodyninterferometrfe im folgenden auch mit V1 bezeichnet,

• die klassische Interferometrie mit einem Michelsoninterferometer (V2) und

• der Einsatz eines optischen Resonators (Fabry-Perot) mit einer Überwachung der Resonatormoden mittels Heterodynverfahren (V3).

Mit den lasermetrologischen Verfahren sind relative Abstandmessungen mit Genauigkeiten um 10 pm in Raten von ca. 1 s möglich. Die Genauigkeit der Winkelmessungen liegt unter 0.1 nrad.

Bei der Messung wird durch die auf die Probemasse ausgerichteten optischen interferometrischen Messstrecken ein Lichtdruck in der Größenordnung von 0,0035 uN/W auf die Probemasse ausgeübt. In einer besonders vorteilhaften Ausführung sind diese optischen Messstrecken derart zueinander ausgerichtet, dass sich die durch die einzelnen optischen Messstrecken auf die Probemasse ausgeübten Lichtdrucke gegenseitig kompensieren. Die optischen Messstrecken sind dabei vorteilhaft auf das Massezentrum und das geometrische Zentrum der Probemasse ausgerichtet.

Durch geeignete Anpassung des Resonators in einer bevorzugten Ausführung des Verfahrens V3 kann Position und Lage der Probemasse fein gesteuert werden. Die Feinjustierung der Probemasse erfolgt durch gezielte Anregung der sich in den Resonatoren ausbildenden longitudinalen und transversalen Resonatormoden unter Ausnutzung der Resonanzüberhöhung, die zu gesteigerten Lichtdruckwerten bei geringerer Laserlichtleistung (wenige mW) führt. Die Messung der Resonatormoden erlaubt darüber hinaus die genaue Bestimmung von Lage und Position der Probemasse. Als vorteilhaft erweist sich zudem die hohe Trennschärfe der Resonatormoden sowie die hohe Güte der Resonatoren.

Eine vorteilhafte Ausrichtung der optischen interferometrischen Messstrecken sowie vorteilhafte Wahl der Laserarbeitsfrequenzen an einer Flanke eines Resonatormodes ermöglicht in Verfahren V3 eine inhärente Selbstzentrierung der Probemasse durch die sich automatisch einstellende Variation des Lichtdrucks in den Resonatormoden.

Die Vorteile von lasermetrologischen Verfahren gegenüber kapazitiven Meßeinrichtungen sind:

- die Eliminierung der Störeinflüsse elektrischer Felder, wodurch eine bessere Entkopplung vom Satellitenkörper ermöglicht wird,
- eine hohe Auflösung bis in den Pikometer-Bereich,
- eine ausgedehnten linearen Kennlinie um den Arbeitspunkt,
- die Bestimmung von Lage und Position der Probemasse in bis zu 6 Freiheitsgraden,
- dass der Abstand zwischen Probemasse und Gehäuse (Referenzelementen) in einem weiten Bereich ($\mu$m bis m) gewählt werden kann.

Weitere Vorteile und vorteilhafte Ausführungsformen der Erfindung werden nachstehend anhand von Zeichnungen, die den prinzipiellen Aufau des erfindungsgemäßen optischen Inertialsensors in einer Ausführung A1 und einer Ausführung A2 zeigen, näher beschrieben. Die Ausführungen werden wie folgt beschrieben :

A1: erfindungsgemäßer Inertialsensor als Positions- und Rotationsreferenz für einen inertial ruhenden oder langsam rotierenden Satelliten.

A2: erfindungsgemäßer Inertialsensor als gemeinsame Positionsreferenz zweier oder mehrerer, unter variablen Winkel sich befindlicher optischer interferometrischer Messstrecken.

Die Zeichnung zeigen in:

Fig. 1 : eine erfindungsgemäße Vorrichtung nach Ausführung A1 für die Durchführung eines Messverfahrens nach V3.

Fig. 2 : das Prinzip der Position- und Lageregelung mittels Lichtdruck nach Messverfahren V3.

Fig. 3a: eine erfindungsgemäße Vorrichtung nach Ausführung A1 für die Durchführung eines Messverfahrens nach V1.

Fig. 3b : die auf die Probemasse ausgerichteten optischen Messstrecken gemäß Fig. 3a.

Fig. 4 : eine erfindungsgemäße Vorrichtung nach Ausführung A2 für die Durchführung eines Messverfahrens nach V3.

Mit den erfindungsgemäßen Vorrichtungen ist es möglich, Lage und Position der Probemasse in bis zu 6 Freiheitsgraden zu bestimmen.

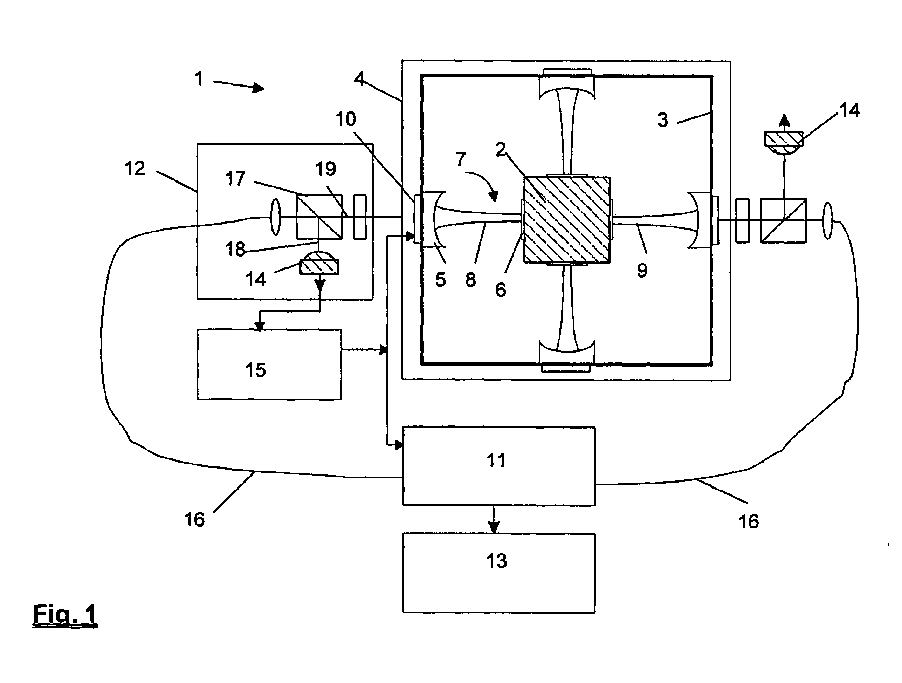

Fig. 1 zeigt die funktionalen Baugruppen des erfindungsgemäßen optischen Inertialsensors 1 nach Ausführung A1. Aus Gründen der Übersichtlichkeit sind lediglich die funktionalen Gruppen zur Bestimmung eines Freiheitsgrades dargestellt. Bei dem dargestellten Messverfahren handelt es sich beispielhaft um das Verfahren V3 eines optischen Fabry-Perot Resonators mit einer laserinterferometrischen Mess- und Regelanordnung gemäß dem Heterodynverfahren.

Die beispielhaft würfelförmig ausgeführte Probemasse 2 ist von einem Gehäuse 3 umgeben, auf welchem eine Abschirmung 4, z.B. $\mu$-Metall, aufgebracht ist, wodurch elektromagnetischen Felder abgeschirmt werden. An der inneren Oberfläche des Gehäuses 3 sowie auf der Oberfläche der Probemasse 2 befinden sich Referenzelemente 5 und 6, z.B. Spiegel, die die einzelnen Fabry-Perot Resonatoren 7 bilden. Die Resonatoren 7 dienen zum einen als optische Messstrecken 8 und zum anderen als Kompensationsstrecken 9 zum Ausgleich des auf die Probemasse 2 ausgeübten Lichtdrucks. An den gehäuseseitigen Referenzelementen 5 befinden sich zusätzlich Piezosteller oder elektro-optische Elemente 10 zur Abstimmung der Resonatoren 7.

Die laserinterferometrische Mess- und Regelanordnung besteht aus einer, für alle optischen Strecken gemeinsamen frequenzstabilisierten Laserquelle 11, z.B. einem Nd:YAG-Laser (z.B. mit einer Leistung von weniger als 100 mW), einer Interferometeroptik 12, einer Frequenzreferenz 13 zur Frequenzstabilisierung der Laserquelle sowie einem Detektor 14. Dem Detektor 14 nachgeschaltet ist ein Kontroller 15 zur Steuerung der Laserfrequenz und der Piezosteller 10. Ferner können die Piezosteller 10 unabhängig vom Detektor 14 von der Laserquelle 11 gesteuert werden.

Das Laserlicht der Laserquelle 11 wird über ein einmodiges, polarisationserhaltendes Glasfaserkabel 16 zu der Interferometeroptik 12 geleitet, wo es in einem Polarisationsstrahlteiler 17 in zwei Teilstrahlen aufgeteilt wird. Der eine Teilstrahl 18 wird dem Detektor 14 zugeführt, der andere Teilstrahl 19 tritt in den Resonator 7 zwischen den Referenzelementen 5 und 6 ein.

Wie beschrieben bilden sich innerhalb der Resonatoren 7 in Abhängigkeit der Resonatorlänge, welche über die Piezosteller 10 einstellbar ist, und der Laserfrequenz longitudinale und transversale Resonatormoden aus. Ein geringer Teil der in den Resonatoren 7 gespeicherten Laserleistung wird durch die gehäuseseitigen Referenzelemente 5, z.B. teildurchlässige Spiegel, aus den Resonatoren 7 ausgekoppelt. Dieser ausgekoppelte Laserstrahl wird in der Interferometeroptik 12 mit dem Teilstrahl 18 überlagert und erzeugt dabei ein Interferenzmuster, das auf den Detektor 14 abgebildet und detektiert wird.

Mit einem Fabry-Perot-Resonator 7 läßt sich, wie beschrieben, eine selbstregulierende Positionierung der Probemasse 2 erzielen. Mittels einer Änderung der Laserfrequenz, einer Resonatorabstimmung mit den Piezostellern 10 oder durch eine relative Verschiebung der Probemasse 2 wird in den Resonatoren 7 eine Positionsstörung $\Delta$L der Probemasse 2 induziert. Dadurch wird der differentielle Lichtdruck in den einzelnen Resonatormoden verändert.

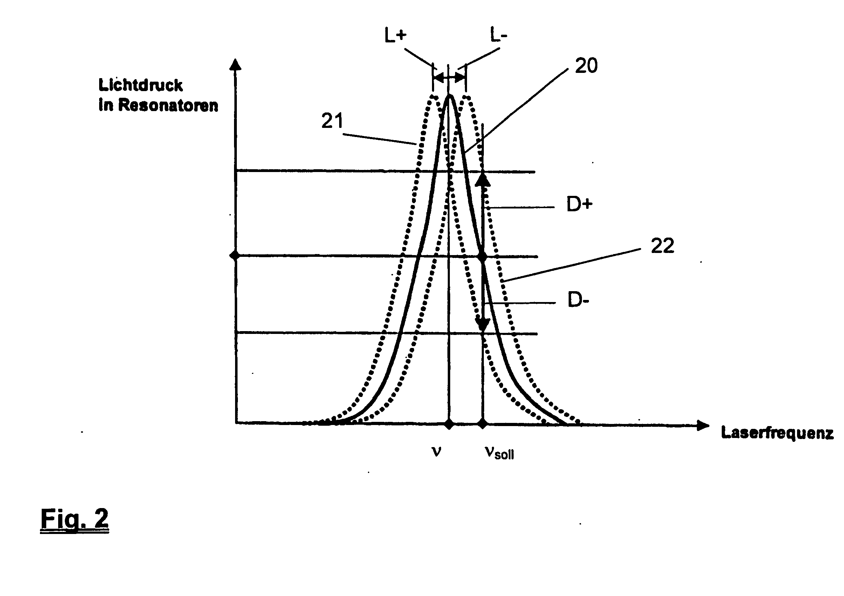

Eine gezielte Anregung der Resonatormoden unter Ausnutzung der Resonanzüberhöhung führt zu einer Steigerung des Lichtdrucks um den Faktor 1000. Somit wird in den optischen Strecken 8 und 9 eine Rückstellkraft auf die Probemasse 2 ausgeübt, wodurch sich eine Selbstzentrierung der Probemasse 2 im Gehäuse 3 ergibt. Fig. 2 zeigt das Prinzip der lichtdruckinduzierten Position- und Lagestellung.

In Fig. 2 ist der Lichtdruck im Resonator 7 gegenüber der Laserfrequenz aufgetragen. Bezugsziffer 20 bezeichnet mit der durchgezogenen Kurve den Resonatormode bei einer Resonanzfrequenz v, der sich bei einer Sollresonatorlänge L in der optischen Messstrecke 8 und der entsprechenden Kompensationsstrecke 9 ausbildet.

Die gepunkteten Kurven 21 und 22 zeigen die sich bei einer Positionsstörung ΔL der Probemasse 2 ausbildenden Resonatormoden. Hierbei bezeichnet Bezugsziffer 21 den Resonatormode in der optischen Messstrecke 8 und Bezugsziffer 22 den Resonatormode in der entsprechenden Kompensationsstrecke 9.

Aus der Positionsstörung ΔL resultiert eine Veränderung der Resonatorlängen in den optischen Strecken 8 und 9. In Fig. 2 bedeutet dies eine Verlängerung L+ der optischen Strecke 8 und eine Verkürzung L- der optischen Strecke 9, wobei sich die Abweichung Δv der Resonanzfrequenz in den optischen Strecken 8 und 9 gemäß der Formel

$$\Delta v = \left(-\frac{c}{2L^2}\right)\Delta L$$

berechnet.

Durch Betrieb der Laserfrequenz $v_{soll}$ auf der höherfrequenten Flanke eines longitudinalen Resonatormodes wird der differentielle Lichtdruck in den optischen Strecken 8 und 9 gesteuert. In Fig. 2 bedeutet dies eine Erhöhung D+ des differentiellen Lichtdrucks auf die Probemasse 2 in der optischen Strecke 9 und eine Erniedrigung D-des differentiellen Lichtdrucks in der optischen Strecke 8, so dass sich eine der Störung entgegenwirkende Rückstellkraft ergibt.

Durch geeignete Wahl und Fixierung der Laserfrequenz kompensieren sich die Lichtdrucke auf die Probemasse 2 in den optischen Strecken 8 und 9 bei der Sollposition und erzeugen geeignete Rückstellkräfte bei longitudinalen Positionsstörungen. Umgekehrt kann durch Abstimmung der Laserfrequenz, insbesondere auch durch Betrieb auf der niederfrequenten Flanke eine gewünschte Beschleunigung der Probemasse erreicht werden.

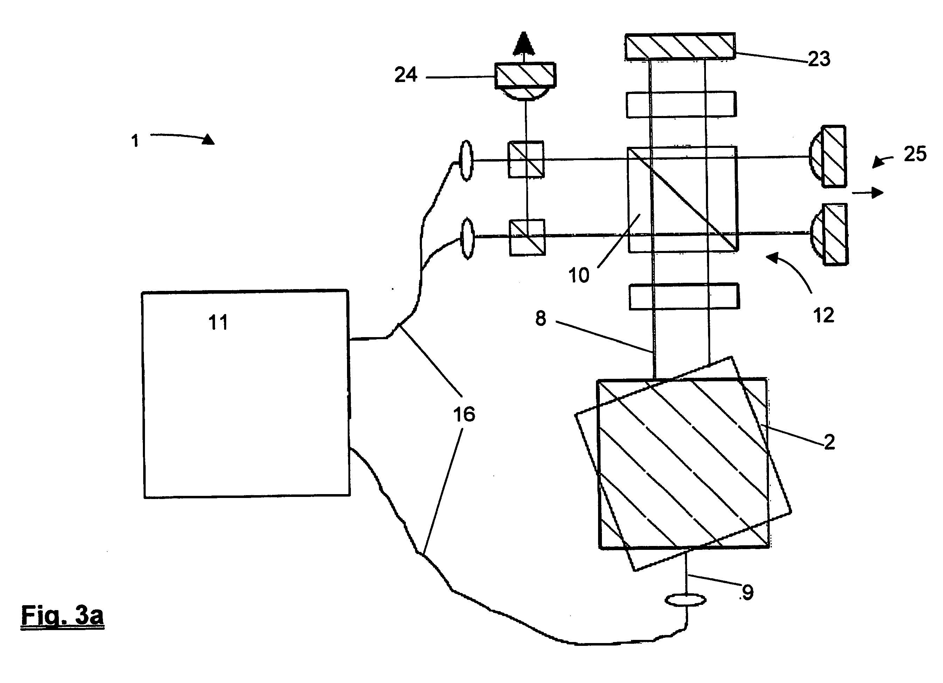

Fig. 3a zeigt eine alternative Vorrichtung eines erfindungsgemäßen Inertialsensors 1 nach Ausgestaltung A1 zur Durchführung von Positions- und Lagemessung mittels der Laserheterodyninterferometrie (V1). Die Darstellung zeigt aus Gründen der Übersichtlichkeit die funktionalen Gruppen für die Positions- und Lagemessung in je einem Freiheitsgrad.

Ähnlich dem Aufbau in Fig. 1 besteht die erfindungsgemäße Vorrichtung aus einer Probemasse 2, einer Laserquelle 11, z.B. Nd:YAG-Laser, je Freiheitsgrad aus einer Interferometeroptik 12 mit einer nachgeschalteten optischen heterodyninterferometrischen Messstrecke 8 sowie einer zugehörigen Kompensationsstrecke 9. Das Laserlicht wird wie in Fig. 1 beschrieben durch einmodige, polarisationserhaltende Glasfaserkabel 16 geleitet.

Die Interferometeroptik 12 ähnelt dem Aufbau eines herkömmlichen Michelsoninterferometers mit einem Polarisationsstrahlteiler 17, einem festen Referenzspiegel 23 sowie der Probemasse 2 als ein in Position und Lage veränderlicher Spiegel. Der Interferometeroptik 11 ist zum einen ein Referenzdetektor 24 vorgeschaltet und ein Heterodyndetektor 25 nachgeschaltet.

In der optischen Messstrecke 8 wird durch mindestens 3 Teilstrahlen zum einen die Position der Probemasse 2 und zum anderen die Verkippung der Probemasse bestimmt. Der durch die Teilstrahlen auf die Probemasse 2 ausgeübte Lichtdruck wird durch den Laserstrahl in der Kompensationsstrecke 9 kompensiert. Der regelbare Lagewinkelbereich ist dabei durch die Justieranforderungen des Laserinterferometers limitiert.

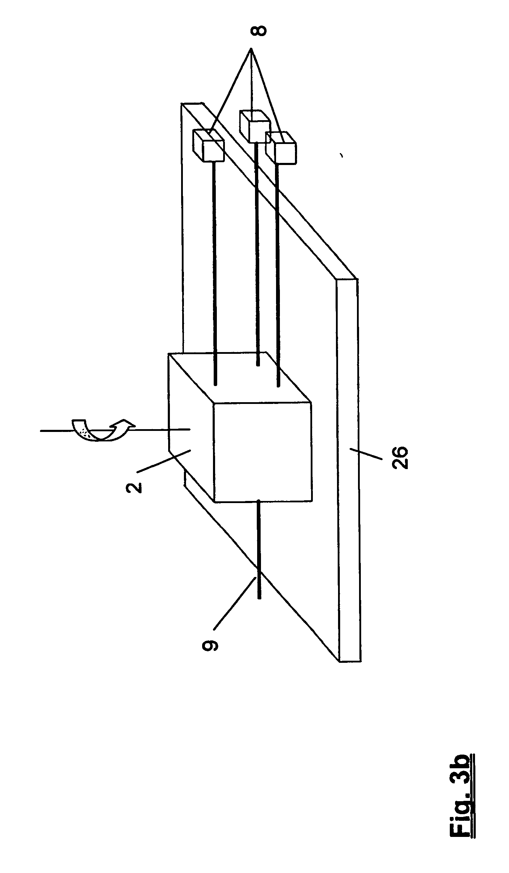

Fig. 3b zeigt eine beispielhaft würfelförmig ausgeführte Probemasse 2 mit beispielhaft 3 optischen Messstrecken 8 zur Bestimmung von Position und Lage der Probemasse. Mit den 3 optischen Messstrecken 8 ist ferner eine genaue Bestimmung zweier Winkel, um den die Probemasse aus der Ausgangslage gekippt ist, möglich. Die Probemasse kann sich hierbei auf einer sich langsam rotierenden Plattform 26 befinden und mit dieser rotieren.

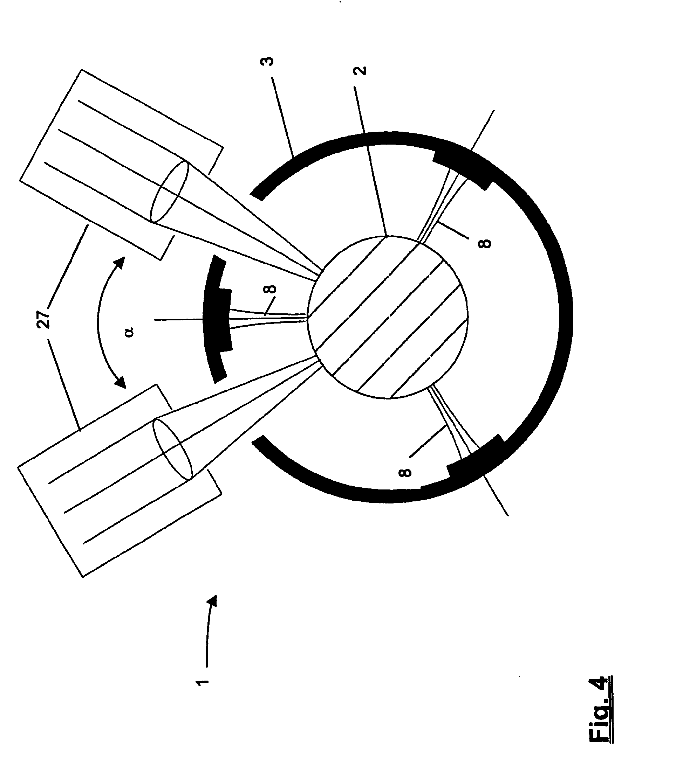

Fig. 4 zeigt in einer weiteren vorteilhaften Anwendung (Ausgestaltung A2) des erfindungsgemäßen Inertialsensors 1, die als gemeinsame und kontinuierlich betriebene Positionsreferenz für mehrere Satelliten oder Satellitenteile eingesetzt werden kann. Zwischen den nicht dargestellten Satelliten oder Satellitenteilen außerhalb des Gehäuses und der Probemasse 2 sind zusätzliche laserinterferometrische Messstrecken 27 vorhanden.

Der Winkel α zwischen den einzelnen laserinterferometrischen Messstrecken 27 kann zeitlich variabel sein.

Zusätzlich kann mittels der optischen Messstrecken 27 der Abstand der Satelliten innerhalb einer Satellitenkonstellation, welcher typischerweise mehrere Millionen Kilometer beträgt, bestimmt werden.

Hierdurch ergibt sich der Vorteil einer vollständigen Trennung von Inertialreferenz und Laserinterferometern in Satellitenkonstellationen.

Im übrigen entspricht das Prinzip dieser Ausführung dem in Fig. 1 beschriebenen. Die Probemasse 2 befindet sich innerhalb eines Gehäuses 3 und kann dabei um eine beliebige Achse rotieren oder inertial ruhen. Das Gehäuse 3 weist für die laserinterferometrischen Messstrecken 27 zusätzliche Durchbrechungen auf. Die Probemasse 2 und das Gehäuse 3 sind vorteilhaft kugelförmig ausgeführt. Es ist auch eine Ausgestaltung der Probemasse 2 denkbar, bei der lediglich die Referenzflächen der optischen Messstrecken 27 auf der Probemasse 2 kugelförmig ausgeführt sind.

Mittels der, zwischen Probemasse 2 und Gehäuse 3 gemäß dem lasermetrologischen Verfahren V3 ausgeführten Messstrecken 8, die auch als Kompensationsstrecken dienen können, werden die Positionsfreiheitsgrade der Probemasse 2 wie beschrieben unabhängig voneinander kontrolliert und gesteuert. Die Messstrecken 8 sind vorteilhaft unter einem fixen Winkel z.B. tetraederförmig zur Probemasse 2 angeordnet.

Die optischen Messstrecken 27 und 8 werden vorteilhaft auf das Zentrum der Probemasse 2 ausgerichtet, wobei die Ausrichtung der optischen Messstrecke 8 auf das optische Zentrum der Probemasse 2, wie beschrieben, durch Messung der Anregung der Resonatormoden kontrolliert wird.

**In der Beschreibung zitierter Stand der Technik**

[1] E. Morrison, B. J. Meers, D. I. Robertson and H. Wald; "Automatic alignment of optical interferometers", Applied Optics; Vol. 33; No. 22; 1994; p5041.

[2] N. M. Sampas and D. Z. Anderson; "Stabilization of laser beam alignment to an optical resonator by heterodyne detection of off-axis modes"; Applied Optics; Vol. 29; No. 3; 1990; p394.

[3] D. Z. Anderson; "Alignment of optical cavities"; Applied Optics; Vol. 23; No. 17; 1984; p2944.

[4] B. Hines, M. Colavita, K. Wallace and A. Poulsen; "Sub-nanometer laser metrology - some techniques and models"; Proceeding of high resolution imaging by interferometry I; Garching; 1991; p1195.

**Bezugszeichenliste**

| | |
|---|---|
| 1 | Inertialsensor |
| 2 | Probemasse |
| 3 | Gehäuse |
| 4 | Abschirmung auf dem Gehäuse angebracht |
| 5 | Referenzelement am Gehäuse |
| 6 | Referenzelement an Probemasse |
| 7 | Resonator |
| 8 | optische Messstrecke |
| 9 | optische Kompensationsstrecke |
| 10 | Piezosteller |
| 11 | Laserquelle |
| 12 | Interferometeroptik |
| 13 | Frequenzreferenz |
| 14 | Detektor |
| 15 | Kontroller |
| 16 | Glasfaserkabel |
| 17 | Polarisationsstrahlteiler |
| 18 | Teilstrahl |
| 19 | Teilstrahl |
| 20 | Resonatormode bei Resonanzfrequenz |
| 21 | Resonatormode in optischer Messstrecke 7 |
| 22 | Resonatormode in optischer Kompensationsstrecke 8 |
| 23 | Referenzspiegel |
| 24 | Referenzdetektor |
| 25 | Heterodyndetektor |
| 26 | Plattform |
| 27 | laserinterferometrische Messstrecken |
| D+ | Erhöhung des differentiellen Lichtdrucks |
| D- | Erniedrigung des differentiellen Lichtdrucks |
| L+ | Verlängerung der optischen Strecke |
| L- | Verkürzung der optischen Strecke |
| $\nu$ | Resonanzfrequenz |
| $\nu_{soll}$ | Soll-Laserfrequenz |
| $\alpha$ | variabler Winkel |

**Patentansprüche**

1. Inertialsensor (1) als Inertialreferenz zur Lage- und Positionsbestimmung von Satelliten oder Satellitenteilen, umfassend

   - eine Probemasse (2), die sich in einem von einem von einem Gehäuse (3, 4) umschlossenen Raum befindet,
   - optische Messstrecken (8, 9) zur Bestimmung von Lage und/oder Position der Probemasse (2),
   - eine sich außerhalb des Gehäuses (3, 4) befindliche Messanordnung (11, 12, 13, 14, 15) für die optischen Messstrecken (8, 9),

   **dadurch gekennzeichnet, dass**

   - der von dem Gehäuse (3, 4) umschlossene Raum elektrisch und magnetisch im Wesentlichen feldfrei ist,
   - die optischen Messstrecken (8, 9) zwischen Referenzelementen (5, 6) am Gehäuse (3) und an der Probemasse (2) eingerichtet sind, so dass Lage und/oder Position der Probemasse (2) relativ zu den Referenzelementen (5) am Gehäuse bestimmbar sind,
   - die optischen Messstrecken (8, 9) als optische interferometrische Messstrecken ausgebildet sind, und
   - mittels der in den optischen interferometrischen Messstrecken (8, 9) auf die Probemasse (2) ausgeübten Lichtdrucke die Lage und Position der Probemasse (2) einstellbar ist.

2. Inertialsensor nach einem der vorangehenden Ansprüche, **dadurch gekennzeichnet, dass** das Gehäuse (3) im wesentlichen ein schwarzer Körper ist.

3. Inertialsensor nach einem der vorangehenden Ansprüche, **dadurch gekennzeichnet, dass** der Abstand zwischen Probemasse (2) und Gehäuse (3) bis zu einigen Meter betragen kann.

4. Inertialsensor nach einem der vorangehenden Ansprüche, **dadurch gekennzeichnet, dass** die Oberfläche der Probemasse (2) als Reflektor ausgebildet ist oder dass auf der Oberfläche der Probemasse (2) im Bereich der Referenzelemente (5) sphärische zentrierte optische Reflektorelemente, z.B. Spiegel, aufgebracht sind.

5. Inertialsensor nach Anspruch 4, **dadurch gekennzeichnet, dass** die Oberfläche der Probemasse (2) oder die optischen Reflektorelemente einen Endspiegel einer der optischen interferometrischen Messstrecken (8, 9) bilden.

6. Inertialsensor nach einem der vorangehenden Ansprüche, **dadurch gekennzeichnet, dass** die optischen interferometrischen Messstrecken (8, 9) derart zueinander angeordnet sind, dass die in den einzelnen Messstrecken (8, 9) auf die Probemasse (2) ausgeübten Lichtdrucke gegenseitig kompensiert werden.

7. Inertialsensor nach Anspruch 6, **dadurch gekennzeichnet, dass** die optischen Achsen der optischen interferometrischen Messstrecken (8, 9) auf das Massezentrum und das geometrische Zentrum der Probemasse (2) ausgerichtet sind.

8. Inertialsensor nach einem der vorangehenden Ansprüche, **dadurch gekennzeichnet, dass** die optischen interferometrischen Messstrecken (8, 9) ein Zweig eines Heterodyninterferometers sind.

9. Inertialsensor nach Anspruch 1 bis 7, **dadurch gekennzeichnet dass** die optischen Messstrecken (8, 9) ein Zweig einer Michelsoninterferometeranordnung sind.

10. Inertialsensor nach Anspruch 1 bis 7, **dadurch gekennzeichnet, dass** die optischen Messstrecken (8, 9) passive optische Resonatoren (7) sind.

11. Inertialsensor nach Anspruch 10, **dadurch gekennzeichnet, dass** in den optischen Resonatoren (7) longitudinale und transversale Resonatormoden einstellbar sind und dass mit deren Messung Position und/oder Lage der Probemasse (2) bestimmbar sind.

12. Inertialsensor nach Anspruch 11, **dadurch gekennzeichnet, dass** der Lichtdruck in den einzelnen Moden durch Resonatorabstimmung mittels der in den optischen Messstrecken (8, 9) angeordneten Piezo (10) oder elektro-optische Elemente variiert werden kann.

13. Inertialsensor nach Anspruch 11, **dadurch gekennzeichnet, dass** der Lichtdruck in den einzelnen Moden durch Variation der Laserfrequenz veränderbar ist.

14. Inertialsensor nach Anspruch 11, **dadurch gekennzeichnet, dass** der Lichtdruck in den einzelnen Moden durch eine gezielte Anregung der longitudinalen und transversalen Resonatormoden unter Ausnutzung der Resonanzüberhöhung veränderbar ist.

15. Inertialsensor nach Anspruch 11, **dadurch gekennzeichnet, dass** der Lichtdruck in den einzelnen Moden durch eine relative Verschiebung oder Verkippung der Probemasse (2) veränderbar ist.

16. Inertialsensor nach einem der vorangehenden Ansprüche 10 bis 15, **dadurch gekennzeichnet, dass** die optischen interferometrischen Messstrecken (8, 9) derart verschaltet sind, dass sich innerhalb der optischen Messstrecken (8, 9) eine Selbstzentrierung der Probemasse (2) aufgrund der Variation des Lichtdrucks ergibt.

17. Inertialsensor nach Anspruch 16, **dadurch gekennzeichnet, dass** die optischen interferometrischen Messstrecken (8, 9) derart verschaltet sind, dass sich innerhalb der optischen Messstrecken (8, 9) die Selbstzentrierung durch Betrieb der Laserfrequenz auf der höherfrequenten Flanke eines longitudinalen Resonatormodes ergibt.

18. Inertialsensor nach einem der vorangehenden Ansprüche, **dadurch gekennzeichnet, dass** Position und/oder Lage der Probemasse (2) in bis zu 6 Freiheitsgraden bestimmbar sind.

19. Inertialsensor nach einem der vorangehenden Ansprüche, **dadurch gekennzeichnet, dass** mindestens zwei weitere optische Messstrecken (27) zwischen der Probemasse (2) und je einem Punkt außerhalb des Gehäuses (3, 4) eingerichtet sind und dass diese optischen Messstrecken (27) dabei auf das optische Zentrum sowie Massezentrum der Probemasse (2) ausgerichtet sind.

20. Inertialsensor nach Anspruch 19, **dadurch gekennzeichnet, dass** der Winkel (a) zwischen den optischen Messstrecken (27) variierbar ist.

21. Inertialsensor nach einem der vorangehenden Ansprüche, **dadurch gekennzeichnet, dass** die Probemasse (2) ganz oder teilweise kugelförmig ist.

## Claims

1. Inertial sensor (1) as an inertial reference for finding the attitude and position of satellites or satellite parts, comprising

   - a sample mass (2) which is located in a space surrounded by a housing (3, 4),
   - optical measurement paths (8, 9) for determining the attitude and/or position of the sample mass (2),
   - a measurement arrangement (11, 12, 13, 14, 15), which is located outside the housing (3, 4), for the optical measuring paths (8, 9),

   **characterized in that**

   - the space which is surrounded by the housing (3, 4) is essentially free of electrical and magnetic fields,
   - the optical measurement paths (8, 9) between reference elements (5, 6) on the housing (3) and on the sample mass (2) are designed such that the attitude and/or position of the sample mass (2) can be determined relative to the reference elements (5) on the housing,
   - the optical measurement paths (8, 9) are in the form of optical interferometric measurement paths, and,
   - the attitude and position of the sample mass (2) can be adjusted by means of the light pressures exerted on the sample mass (2) in the optical interferometric measurement paths (8, 9).

2. Inertial sensor according to one of the preceding claims, **characterized in that** the housing (3) is essentially a black body.

3. Inertial sensor according to one of the preceding claims, **characterized in that** the distance between the sample mass (2) and the housing (3) may be up to several meters.

4. Inertial sensor according to one of the preceding claims, **characterized in that** the surface of the sample mass (2) is in the form of a reflector, or **in that** spherical, centred, optical reflector elements, for example mirrors, are fitted on the surface of the sample mass (2) in the area of the reference elements (5).

5. Inertial sensor according to Claim 4, **characterized in that** the surface of the sample mass (2) or the optical reflector elements forms or form an end mirror of one of the optical interferometric measurement paths (8, 9).

6. Inertial sensor according to one of the preceding claims, **characterized in that** the optical interferometric measurement paths (8, 9) are arranged with respect to one another such that the light pressures which are exerted on the sample mass (2) in the individual measurement paths (8, 9) are mutually compensated for.

7. Inertial sensor according to Claim 6, **characterized in that** the optical axes of the optical interferometric measurement paths (8, 9) are aligned with the mass centre and the geometric centre of the sample mass (2).

8. Inertial sensor according to one of the preceding claims, **characterized in that** the optical interferometric measurement paths (8, 9) are a branch of a heterodyne interferometer.

9. Inertial sensor according to Claims 1 to 7, **characterized in that** the optical measurement paths (8, 9) are a branch of a Michelson interferometer arrangement.

10. Inertial sensor according to Claims 1 to 7, **characterized in that** the optical measurement paths (8, 9) are passive optical resonators (7).

11. Inertial sensor according to Claim 10, **characterized in that** longitudinal and transversal resonator modes can be set in the optical resonators (7), and **in that** the position and/or attitude of the sample mass (2) can be determined by measurement of these modes.

12. Inertial sensor according to Claim 11, **characterized in that** the light pressure in the individual modes can be varied by resonator tuning by means of the piezo (10) or electro-optical elements arranged in the optical measurement paths (8, 9).

13. Inertial sensor according to Claim 11, **characterized in that** the light pressure in the individual modes can be varied by variation of the laser frequency.

14. Inertial sensor according to Claim 11, **characterized in that** the light pressure in the individual modes can be varied by deliberate excitation of the longitudinal and transversal resonator modes, using the resonant peak.

15. Inertial sensor according to Claim 11, **characterized in that** the light pressure in the individual modes can be varied by relative displacement or tilting of the sample mass (2).

16. Inertial sensor according to one of the preceding claims 10 to 15, **characterized in that** the optical interferometric measurement paths (8, 9) are connected such that this results in self-centring of the sample mass (2) within the optical measurement paths (8, 9) on the basis of the variation of the light pressure.

17. Inertial sensor according to Claim 16, **characterized in that** the optical interferometric measurement paths (8, 9) are connected such that the self-centring within the optical measurement paths (8, 9) result by operation of the laser frequency on the higher-frequency flank of a longitudinal resonator mode.

18. Inertial sensor according to one of the preceding claims, **characterized in that** the position and/or attitude of the sample mass (2) can be determined in up to 6 degrees of freedom.

19. Inertial sensor according to one of the preceding claims, **characterized in that** at least two further optical measurement paths (27) are formed between the sample mass (2) and in each case one point outside the housing (3, 4) and **in that** these optical measurement paths (27) are in this case aligned with the optical centre and the mass centre of the sample mass (2).

20. Inertial sensor according to Claim 19, **characterized in that** the angle (a) between the optical measurement paths (27) is variable.

21. Inertial sensor according to one of the preceding claims, **characterized in that** the sample mass (2) is entirely or partially spherical.

**Revendications**

1. Capteur inertiel (1) comme référence inertielle pour la détermination de l'emplacement et de la position de satellites ou de parties de satellite, comprenant

   - une masse d'échantillon (2), qui se trouve dans un espace enfermé par un boîtier (3, 4),
   - des sections de mesure (8, 9) optiques pour la détermination de l'emplacement et/ou de la position de la masse d'échantillon (2),
   - un dispositif de mesure (11, 12, 13, 14, 15) se trouvant à l'extérieur du boîtier (3, 4) pour les sections de mesure (8, 9) optiques,

   **caractérisé en ce que**

   - l'espace enfermé par le boîtier (3, 4) est sensiblement exempt de champ au plan électrique et magnétique,
   - les sections de mesure (8, 9) optiques sont mises en place entre des éléments de référence (5, 6) sur le boîtier (3) et sur la masse d'échantillon (2), de sorte que l'emplacement et/ou la position de la masse d'échantillon (2) peuvent être déterminés par rapport aux éléments de référence (5) sur le boîtier,
   - les sections de mesure (8, 9) optiques sont conçues sous forme de sections de mesure interférométriques optiques, et
   - l'emplacement et la position de la masse d'échantillon (2) peuvent être réglés au moyen des pressions de lumière exercées dans les sections de mesure (8, 9) interférométriques optiques sur la masse d'échantillon (2).

2. Capteur inertiel selon l'une quelconque des revendications précédentes, **caractérisé en ce que** le boîtier (3) est essentiellement un corps noir.

3. Capteur inertiel selon l'une quelconque des revendications précédentes, **caractérisé en ce que** la distance entre la masse d'échantillon (2) et le boîtier (3) peut aller jusqu'à quelques mètres.

4. Capteur inertiel selon l'une quelconque des revendications précédentes, **caractérisé en ce que** la surface de la masse d'échantillon (2) est conçue sous forme de réflecteur ou **en ce que** des éléments de réflecteur optiques centrés et sphériques, par exemple des miroirs, sont appliqués sur la surface de la masse d'échantillon (2) dans la zone des éléments de référence (5).

5. Capteur inertiel selon la revendication 4, **caractérisé en ce que** la surface de la masse d'échantillon (2) ou les éléments de réflecteur optiques forment un miroir final de l'une des sections de mesure (8, 9) interférométriques optiques.

6. Capteur inertiel selon l'une quelconque des revendications précédentes, **caractérisé en ce que** les sections de mesure (8, 9) interférométriques optiques sont disposées les unes par rapport aux autres de telle sorte que les pressions de lumière exercées dans les différentes sections de mesure (8, 9) sur la masse d'échantillon (2) sont compensées de façon réciproque.

7. Capteur inertiel selon la revendication 6, **caractérisé en ce que** les axes optiques des sections de mesure (8, 9) interférométriques optiques sont orientés sur le centre de la masse et le centre géométrique de la masse d'échantillon (2).

8. Capteur inertiel selon l'une quelconque des revendications précédentes, **caractérisé en ce que** les sections de mesure (8, 9) interférométriques optiques sont une branche de l'interféromètre hétérodyne.

9. Capteur inertiel selon les revendications 1 à 7, **ca-**

**ractérisé en ce que** les sections de mesure (8, 9) optiques sont une branche d'un dispositif d'interféromètre de Michelson.

10. Capteur inertiel selon les revendications 1 à 7, **caractérisé en ce que** les sections de mesure (8, 9) optiques sont des résonateurs (7) optiques passifs.

11. Capteur inertiel selon la revendication 10, **caractérisé en ce que** des modes de résonateur longitudinaux et transversaux peuvent être réglés dans les résonateurs (7) optiques et **en ce que** la position et/ou l'emplacement de la masse d'échantillon (2) peuvent être déterminés avec la mesure de ces modes.

12. Capteur inertiel selon la revendication 11, **caractérisé en ce que** la pression de lumière dans les modes individuels peut être modifiée par adaptation de résonateur au moyen des éléments piézo (10) ou électro-optiques disposés dans les sections de mesure (8, 9) optiques.

13. Capteur inertiel selon la revendication 11, **caractérisé en ce que** la pression de lumière dans les différents modes peut être modifiée par variation de la fréquence laser.

14. Capteur inertiel selon la revendication 11, **caractérisé en ce que** la pression de lumière dans les différents modes peut être modifiée par une excitation appropriée des modes de résonateur longitudinaux et transversaux en utilisant l'amplification de fréquence.

15. Capteur inertiel selon la revendication 11, **caractérisé en ce que** la pression de lumière dans les différents modes peut être modifiée par un déplacement relatif ou un basculement de la masse d'échantillon (2).

16. Capteur inertiel selon l'une quelconque des revendications 10 à 15 précédentes, **caractérisé en ce que** les sections de mesure (8, 9) interférométriques optiques sont connectées de telle sorte qu'un auto-centrage de la masse d'échantillon (2) est obtenu à l'intérieur des sections de mesure (8, 9) optiques en raison de la variation de la pression de lumière.

17. Capteur inertiel selon la revendication 16, **caractérisé en ce que** les sections de mesure (8, 9) interférométriques optiques sont connectées de telle sorte que l'auto-centrage est obtenu à l'intérieur des sections de mesure (8, 9) optiques par le fonctionnement de la fréquence de laser sur le flanc à fréquence plus élevée d'un mode de résonateur longitudinal.

18. Capteur inertiel selon l'une quelconque des revendications précédentes, **caractérisé en ce que** la position et/ou l'emplacement de la masse d'échantillon (2) peuvent être déterminés avec jusqu'à 6 degrés de liberté.

19. Capteur inertiel selon l'une quelconque des revendications précédentes, **caractérisé en ce qu'**au moins deux autres sections de mesure (27) optiques sont mises en place entre la masse d'échantillon (2) et à chaque fois un point à l'extérieur du boîtier (3, 4) et **en ce que** les sections de mesure (27) optiques sont dirigées alors sur le centre optique ainsi que le centre de la masse d'échantillon (2).

20. Capteur inertiel selon la revendication 19, **caractérisé en ce que** l'angle (a) entre les sections de mesure (27) optiques est variable.

21. Capteur inertiel selon l'une quelconque des revendications précédentes, **caractérisé en ce que** la masse d'échantillon (2) est entièrement ou partiellement sphérique.

**Fig. 1**

Fig. 2

Fig. 3a

**Fig. 3b**

EP 1 167 978 B1

**Fig. 4**

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4170904 A
- DE 19921390 A1
- EP 0569994 A2
- US 3710279 A
- DE 3606875 A1

**In der Beschreibung aufgeführte Nicht-Patentliteratur**

- **E. MORRISON ; B. J. MEERS ; D. I. ROBERTSON ; H. WALD.** Automatic alignment of optical interferometers. *Applied Optics,* 1994, vol. 33 (22), 5041
- **N. M. SAMPAS ; D. Z. ANDERSON.** Stabilization of laser beam alignment to an optical resonator by heterodyne detection of off-axis modes. *Applied Optics,* 1990, vol. 29 (3), 394
- **D. Z. ANDERSON.** Alignment of optical cavities. *Applied Optics,* 1984, vol. 23 (17), 2944
- **B. HINES ; M. COLAVITA ; K. WALLACE ; A. POULSEN.** Sub-nanometer laser metrology - some techniques and models. *Proceeding of high resolution imaging by interferometry I; Garching,* 1991, 1195